# EUROPEAN PATENT SPECIFICATION

(11) **EP 4 209 266 B1**
(45) Date of publication and mention of the grant of the patent: **09.04.2025**
(21) Application number: 21908240.1
(22) Date of filing: 07.01.2021
(51) Int. Cl.: B01J 20/26, B01J 20/28, B01J 20/30, C22B 26/12, C22B 3/24

(54) **PREPARATION METHOD FOR POROUS SPINNING COMPOSITE MATERIAL**
HERSTELLUNGSVERFAHREN FÜR PORÖSES SPINNVERBUNDMATERIAL
PROCÉDÉ DE PRÉPARATION D'UN MATÉRIAU COMPOSITE DE FILAGE POREUX

(30) Priority: 22.12.2020 CN 202011524295
(43) Date of publication of application: 12.07.2023
(73) Proprietor: Tianjin University Of Science And Technology, Tianjin 300000 (CN); Central Laboratory of Geological Mineral Exploration and Development Bureau of Tibet Autonomous Region, Lasa, Tibet 850033 (CN)
(72) Inventor: DENG, Tianlong, Tianjin 300457 (CN); ZHAO, Kaiyu, Tianjin 300457 (CN); YU, Xiaoping, Tianjin 300457 (CN); LI, Mingli, Tianjin 300457 (CN); DUO, Ji, Tianjin 300457 (CN); GUO, Yafei, Tianjin 300457 (CN)
(74) Representative: JD&P Patent Attorneys Joanna Dargiewicz & Partners
(86) International application number: PCT/CN2021/070555
(87) International publication number: WO 2022/134221

(56) References cited:
- CN-A- 109 225 121
- CN-A- 109 537 106
- CN-A- 110 090 614
- KR-B1- 102 146 063
- US-A1- 2019 275 473
- LAWAGON CHOSEL P. ET AL: "Development of high capacity Li+ adsorbents from H2TiO3/polymer nanofiber composites: Systematic polymer screening, characterization and evaluation", JOURNAL OF INDUSTRIAL AND ENGINEERING CHEMISTRY, vol. 70, 1 February 2019 (2019-02-01), KOREA, pages 124 - 135, XP055793076, ISSN: 1226-086X, DOI: 10.1016/j.jiec.2018.10.003
- HAN TAO ET AL: "Green recovery of low concentration of lithium from geothermal water by a novel FPO/KNiFC ion pump technique", ELECTROCHIMICA ACTA, ELSEVIER, AMSTERDAM, NL, vol. 350, 10 May 2020 (2020-05-10), XP086164312, ISSN: 0013-4686, [retrieved on 20200510], DOI: 10.1016/J.ELECTACTA.2020.136385
- XU PING ET AL: "Materials for lithium recovery from salt lake brine", JOURNAL OF MATERIAL SCIENCE, KLUWER ACADEMIC PUBLISHERS, DORDRECHT, vol. 56, no. 1, 19 August 2020 (2020-08-19), pages 16 - 63, XP037276108, ISSN: 0022-2461, [retrieved on 20200819], DOI: 10.1007/S10853-020-05019-1

## Description

### TECHNICAL FIELD

The present invention belongs to the field of material chemical engineering and relates to lithium-ion adsorption materials, particularly to a method for a porous spinning composite material.

### BACKGROUND OF THE PRESENT INVENTION

Lithium serving as the lightest metal is widely applied to the fields of aerospace, lithium-ion batteries, the nuclear industry, ceramics and electronic devices and is praised as a "strategic energy metal" in the 21st century. With the continuous development of modern high technology, lithium demands are increasing. The sources of lithium are mainly divided into two categories: solid lithium ore resources that mainly include lepidolite, spodumene and petalite, and liquid lithium ore resources that mainly include salt lake brine, concentrated seawater, geothermal water and underground brine. However, with the exhaustion of the solid lithium ore resources and higher energy consumption during extraction, attention has been gradually paid to the liquid lithium ore resources that are abundant in reserve and low in cost.

At present, the methods for extracting lithium from the liquid lithium ore mainly include a precipitation method, an electrochemical method, an extraction method and an adsorption method. The adsorption method has the advantages of being low in cost, simple in process, green and efficient, and gradually becoming a lithium extraction method with the most excellent application prospects. The key to the technology is to prepare a lithium adsorbent with excellent adsorption properties. Because of higher adsorption capacity and lithium-ion selectivity, lithium-ion sieve-type oxides gradually become the research focus. However, most lithium-ion sieve-type oxides exist in the form of superfine powder; applications of the oxides in the industry are greatly limited by lower fluidity and cycling stability. The key to solving the problem is to prepare a composite lithium-ion sieve adsorbent having high adsorption capacity, high adsorption rate, excellent cycling stability and low cost.

Through retrieval, related patent literature reports are discovered as follows:
1. A patent CN101898113A discloses a spherical lithium-ion composite adsorbent that takes polyvinyl chloride as an adhesive and takes a manganic lithium-ion sieve (LMO: LiMn₂O₄, Li_{1.6}Mn_{1.6}O₄ and Li₄Mn₅O₁₂) as a core material. Although the problem of low fluidity is solved, the adsorption rate of the coated lithium-ion sieve is significantly decreased.
2. A patent CN106902781B discloses an HMO-supported mesoporous hollow silicon sphere having a larger specific surface area and adsorption rate. However, during the application, the lithium-ion sieve is directly exposed to the surface of the hollow silicon sphere to contact a solution. Therefore, the cycling stability is low.
3. A patent CN102211012A discloses a lithium-ion sieve mixed matrix membrane for lithium extraction from seawater by taking polyvinylidene fluoride as an adhesive, taking N, N-dimethyl acetamide as a solvent and taking Li_{1.6}Mn_{1.6}O₄ as a core material. However, the core material has low capacity in unit mass; the adsorption equilibrium time is long (counted by 12 hours), and lithium extraction efficiency is lower.
4. A patent CN109225121A discloses a hollow fiber membrane that takes polyacrylonitrile as an adhesive and takes H_{1.6}Mn_{1.6}O₄ as a core material. Although the lithium extraction efficiency is further improved, manganese dissolution loss caused by a disproportionated reaction is relatively severe during hydrochloric acid elution, and the cycling stability is low. Moreover, corresponding matched membrane components are easily contaminated; membrane equipment has a high maintenance cost, which is not conducive to a large-scale industrial operation.

The article by Lawagon, C. P. et al in the Journal of Industrial and Engineering Chemistry, 2019, 70, 124-135 discloses the preparation of HTO composite nanofibers.

Since lithium ore in geothermal water generally has a low mineralization degree of 1-10 g/L only and low lithium concentration (5-30 mg/L), green and efficient extraction of the lithium ore is difficult. Further, for the salt lake surface brine having a low mineralization degree, due to dissolution loss of the manganic lithium-ion sieve, contamination is easily caused, and the cycling stability is poor. The adsorption materials mentioned in the above patents are inapplicable to the extraction of lithium from the geothermal water and the salt lake surface brine having a low mineralization degree.

To realize green and efficient lithium extraction from the liquid lithium ore, a porous spinning composite adsorbent that is simple in the preparation process, stable in performance, high in adsorption efficiency and easy for industrial operation needs to be developed. The mainly problem to be solved is how to improve porosity and adsorption rate of the composite fibers.

### SUMMARY OF PRESENT INVENTION

The purpose of the present invention is to provide a fibrous spinning composite adsorption material that is simple in preparation procedure, high in adsorption capacity, high in adsorption rate, and easy for large-scale preparation and industrial operation, thereby realizing efficient lithium separation and recovery in liquid lithium ore resources with low lithium concentration (5-30 mg/L) and low mineralization degree and laying a foundation for industrialized application of the porous spinning composite adsorption material.

The present invention is defined by the appended claim.

A preparation method for the porous spinning composite material includes the following steps:
(1) heating and stirring a high-molecular polymer to be dissolved into an organic solvent and standing and defoaming the mixed solution at room temperature;
(2) adding a certain amount of lithium-ion sieve powder and a water-soluble pore-forming agent into the mixed solution obtained in step (1), and fully stirring and uniformly mixing the lithium-ion sieve powder and the water-soluble pore-forming agent to obtain a composite spinning stock solution of the high-molecular polymer/lithium-ion sieve;
(3) adding the composite spinning stock solution obtained in step (2) into a raw material tank of wet spinning equipment; spraying the spinning stock solution into a coagulating bath by a spinning jet for performing phase inversion molding to obtain a porous composite precursor;
(4) conducting draft washing on the composite precursor subjected to coagulation molding in step (3); and curing the composite precursor to obtain porous composite lithium-ion sieve spinning fibers.

Also disclosed is (5) applying the porous composite lithium-ion sieve spinning fibers obtained in step (4) in the extraction of lithium in liquid lithium ore.

Further, the high-molecular polymer is one or a mixture of more than one of polyethylene, polypropylene, polyvinyl chloride, polyvinylidene fluoride, polytetrafluoroethylene, polystyrene, polyacrylonitrile, polyamide, polysulfone, sulfonated polysulfone, polyarylsulfone and polyether sulfone.

Further, the organic solvent is one or a mixture of more than one of dimethyl formamide, dimethyl acetamide, dimethyl sulfoxide, N-methyl pyrrolidone, tetrahydrofuran, dichloromethane and tetrachloromethane.

Further, the lithium-ion sieve powder is LiTi₂O₄, Li₂TiO₃, Li₄Ti₅O₁₂, or one or a mixture of more than one of H products of LiTi₂O₄, Li₂TiO₃ and Li₄Ti₅O₁₂ after acid pickling.

Further, the water-soluble pore-forming agent is a mixture of more than one of LiCl, KCl, NaHCO₃, (NH₄)₂CO₃, NH₄HCO₃, polyethylene glycol-200/400/600/800/1000 and polyvinyl pyrrolidone.

Further, the additional amount of the pore-forming agent is 2-10% of the total mass of the mixed solution; under the condition the porosity of the composite fibers may be greatly increased and leakage of the lithium-ion sieve powder material is avoided. The pore-forming agent is a substance that causes pores to form within a high-molecular polymer. When a pore-forming agent is added to a mixed solution containing high-molecular polymer, the pore-forming agent exists in a small droplet state in the mixed solution, and the high-molecular polymer becomes a porous high-molecular polymer, resulting in the final porous composite lithium-ion sieve spinning fibers having high adsorption rate, and cycling stability.

Further, the mass ratio of the high-molecular polymer to the lithium-ion sieve is 1:4-4:1.

Further, the spinning jet of the wet spinning equipment has 20-60 holes; each spinneret hole has a diameter of 0.05-0.5 mm; a spinning speed is 2-20 m/min; and a winding machine has a speed of 2-30 m/min.

Further, the coagulating bath is a mixed aqueous solution containing organic solvents such as one or more than one of dimethyl formamide, dimethyl acetamide, dimethyl sulfoxide, N-methyl pyrrolidone, tetrahydrofuran and dichloromethane, and has a mass fraction of 5-25%. Under this condition, the porous composite lithium-ion sieve spinning fibers are rapidly molded.

The present invention further discloses an application of the porous spinning composite material in the extraction of lithium from liquid lithium ore.

The liquid lithium ore is geothermal water and has a mineralization degree TDS of 1-10 g/L and a lithium concentration of 5-30 mg/L, and a pH value of the porous spinning composite material is controlled at 7-13 during extraction of lithium from the geothermal water.

The liquid lithium ore is salt lake surface brine having a low mineralization degree, and the pH value of the porous spinning composite material is controlled at 7-13 during extraction of lithium from the salt lake surface brine having a low mineralization degree.

The liquid lithium ore for porous spinning further includes salt lake brine, underground brine, well mine brine, geothermal water, seawater and seabed hydrothermal ore.

Methods for the composite material used during extraction of lithium from the liquid lithium ore include adsorption column, adsorption bed and adsorption tower type operations.

The present invention has advantages and positive effects as follows:
(1) The porous spinning composite material in the present invention is simple in a preparation process procedure, low in cost, mature in matched equipment and easy for large-scale production and application of the material.
(2) The porous spinning composite material in the present invention effectively solves the problem that the lithium-ion sieve powder material is low in fluidity, difficult to mold, low in stability, difficult to recycle and difficult in large-scale production.
(3) The porous spinning composite material in the present invention has excellent selectivity on the lithium-ion, also has high adsorption capacity, adsorption rate and cycling stability, and can be widely applied to separation and extraction of lithium in liquid lithium ore of different types, particularly lithium in the geothermal water. Moreover, the matched lithium extraction method easily realizes continuous industrial operations.

### DESCRIPTION OF THE DRAWINGS

Fig. 1(a) is a real product picture of a polysulfone-H₂TiO₃ porous spinning composite material prepared in embodiment 1 of the present invention;
Fig. 1(b) is the polarizing microscope magnified drawing of a polysulfone-H₂TiO₃ porous spinning composite material prepared in embodiment 1 of the present invention;
Fig. 2(a) is an adsorption capacity comparison diagram of a polysulfone-H₂TiO₃ porous spinning composite material prepared in embodiment 1 of the present invention and powdered H₂TiO₃ during lithium adsorption under the same condition;
Fig. 2(b) is a cycling stability comparison diagram of a polysulfone-H₂TiO₃ porous spinning composite material prepared in embodiment 1 of the present invention and powdered H₂TiO₃ during lithium adsorption under the same condition;
Fig. 3(a) is a real product picture of a polyacrylonitrile-H₄Ti₅O₁₂ porous spinning composite material prepared in embodiment 2 of the present invention;
Fig. 3(b) is the polarizing microscope magnified drawing of a polyacrylonitrile-H₄Ti₅O₁₂ porous spinning composite material prepared in embodiment 2 of the present invention;
Fig. 4(a) is a real product picture of a polyacrylonitrile-Li₂TiO₃ porous spinning composite material prepared in embodiment 3 of the present invention; and
Fig. 4(b) is the polarizing microscope magnified drawing of a polyacrylonitrile-Li₂TiO₃ porous spinning composite material prepared in embodiment 3 of the present invention.

### DETAILED DESCRIPTION OF PREFERRED EMBODIMENTS

The present invention will be further described below in combination with drawings and specific embodiments.

### Embodiment 1: Preparation of polysulfone-H₂TiO₃ porous spinning composite material and lithium extraction from geothermal water thereof.

10 g of polysulfone granules were weighed in a beaker; 90 g of N-methyl pyrrolidone was added into the beaker; and the components were heated and stirred by a magnetic stirrer in a thermostatic water bath until the polysulfone granules were completely dissolved.

10 g of H₂TiO₃ powder and 8 g of a water-soluble pore-forming agent PEG-400 were weighed in the above polysulfone mixed solution and fully mixed and uniformly stirred so that H-type lithium-ion sieve powder H₂TiO₃ was uniformly dispersed in the polysulfone mixed solution.

A polysulfone/H₂TiO₃ composite spinning stock solution was added into a raw material tank of wet spinning equipment; the number of holes of a spinning jet was adjusted to 40, wherein each spinneret hole had a diameter of 0.07 mm, a spinning speed was 13 m/min, and a drafting and winding speed was 16 m/min; and the stock solution was spun into a coagulating bath via the spinning jet and subjected to phase inversion molding and draft washing, thereby obtaining the polysulfone-H₂TiO₃ porous spinning composite material. The composite spinning material obtained under the condition has morphology integrity, uniform thickness and excellent adsorption property. Compared with composite spinning material obtained by the spinneret hole diameter of 0.1 mm under the same condition, the adsorption capacity is increased by 13.69%, and the adsorption rate is increased by 30%.

The prepared polysulfone-H₂TiO₃ porous spinning composite material is applied to the extraction of lithium from geothermal water having an initial lithium-ion concentration of 26.5895 mg·L⁻¹; a pH value of the geothermal water is regulated as 12.1, and 1 g of the polysulfone-H₂TiO₃ porous spinning composite material is added into 1 L of geothermal water for adsorption.

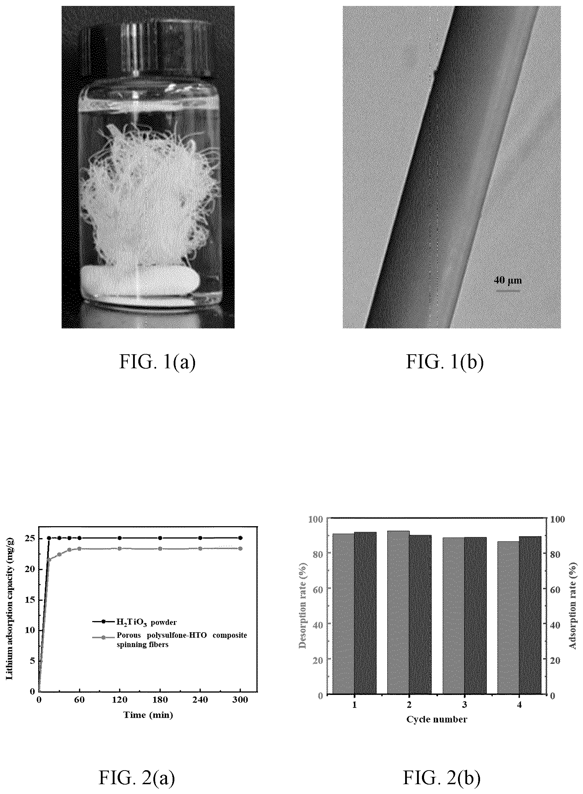

A real product picture and a polarizing microscope magnified drawing of the prepared material are shown in Figs. 1(a) and 1(b); and a comparison of adsorption capacity for lithium adsorption with the powder H₂TiO₃ under the same condition and cycling stability are shown in Figs. 2(a) and 2(b). Thus, the spinning fiber coated/molded lithium-ion sieve powder may still maintain higher adsorption capacity and rate, and the adsorption capacity and rate are not significantly decreased compared with the powder material.

Relative to those of granular and membrane adsorption materials, the adsorption rate and adsorption capacity of the fibrous spinning composite adsorption material prepared in the present embodiment are greatly increased. For example, for a PVC-LiMn₂O₄ granular composite adsorbent disclosed in a patent CN101898113A and a PVC-Li_{1.6}Mn_{1.6}O₄ membrane composite adsorbent disclosed in a patent CN102211012A, adsorption equilibrium achievement time is respectively 120 hours and 8 hours at normal temperature. In contrast, the polysulfone-H₂TiO₃ porous spinning composite material in the present embodiment can achieve adsorption equilibrium within 1 hour only at the normal temperature. For example, for a porous PVC-PEG-H₂TiO₃ composite microsphere reported in the literature "ACS Applied Materials & Interfaces, 2019, 11(29), 26364-26372", although the adsorption rate is further improved, and the adsorption equilibrium can be achieved within 3 hours, the adsorption capacity is lower and is up to 7 mg·g⁻¹ only. However, the adsorption capacity of the porous polysulfone-H₂TiO₃ spinning composite material prepared in the present embodiment may be up to 23.39 mg·g⁻¹. Moreover, the adsorption equilibrium time is only 40 minutes; and various adsorption properties are significantly increased.

### Embodiment 2: Preparation of polyacrylonitrile-H₄Ti₅O₁₂ spinning composite material and lithium extraction from geothermal water thereof

10 g of polyacrylonitrile powder was weighed in a beaker; 90 g of dimethyl formamide was added into the beaker; and the components were heated and stirred by a magnetic stirrer in a thermostatic water bath until the polyacrylonitrile powder was completely dissolved.

5 g of H₄Ti₅O₁₂ powder was weighed in the above polyacrylonitrile mixed solution and fully mixed and uniformly stirred so that lithium-ion sieve powder was uniformly dispersed in the polyacrylonitrile mixed solution.

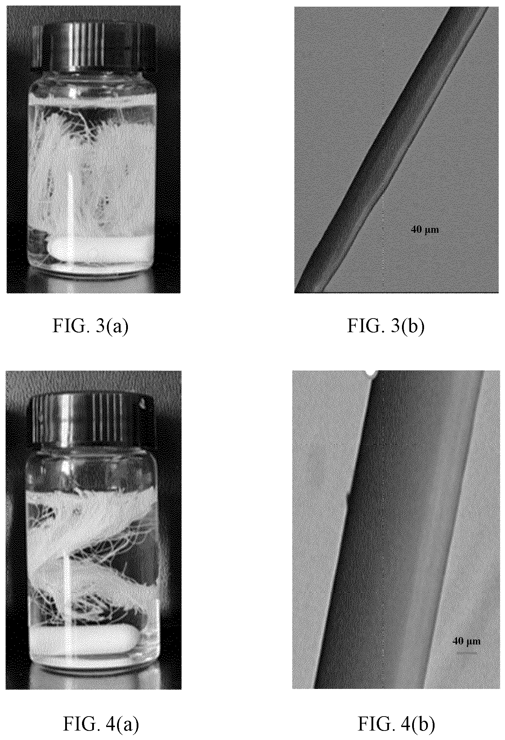

A polyacrylonitrile/H₄Ti₅O₁₂ composite spinning stock solution was added into a raw material tank of wet spinning equipment; the number of holes of a spinning jet was adjusted to 50, wherein each spinneret hole had a diameter of 0.05 mm, a spinning speed was 10 m/min, and a drafting and winding speed was 110 m/min; and the stock solution was spun into a coagulating bath via the spinning jet and subjected to phase inversion molding and draft washing, thereby obtaining the polyacrylonitrile-H₄Ti₅O₁₂ spinning composite material. A real product picture and a polarizing microscope magnified drawing of the prepared material are shown in Figs. 3(a) and 3(b).

The prepared polyacrylonitrile-H₄Ti₅O₁₂ spinning composite material is applied to the extraction of lithium from geothermal water; a pH value of the geothermal water is regulated as 11.8; 1 g of the polysulfone-H₂TiO₃ porous spinning composite material is added into 1.5 L of geothermal water for adsorption; adsorption capacity may be up to 20.07 mg/g; and adsorption equilibrium was achieved within 50 minutes.

### Embodiment 3: Preparation of polyacrylonitrile-Li₂TiO₃ spinning composite material and lithium extraction from geothermal water thereof

10.5 g of polyacrylonitrile powder was weighed in a beaker; 90 g of dimethyl formamide was added into the beaker; and the components were heated and stirred by a magnetic stirrer in a thermostatic water bath until the polyacrylonitrile powder was completely dissolved.

10 g of Li₂TiO₃ powder was weighed in the above polyacrylonitrile mixed solution and fully mixed and uniformly stirred so that lithium-ion sieve powder was uniformly dispersed in the polyacrylonitrile mixed solution.

A polyacrylonitrile/Li₂TiO₃ composite spinning stock solution was added into a raw material tank of wet spinning equipment; the number of holes of a spinning jet was adjusted to 40, wherein each spinneret hole had a diameter of 0.07 mm, a spinning speed was 10 m/min, and a drafting and winding speed was 10 m/min; and the stock solution was spun into a coagulating bath via the spinning jet and subjected to phase inversion molding and draft washing to obtain a polyacrylonitrile-Li₂TiO₃ spinning composite material; and the polyacrylonitrile-Li₂TiO₃ spinning composite material was subjected to further acid pickling, thereby obtaining the polyacrylonitrile-H₂TiO₃ spinning composite material. Further, adsorption was conducted in the above geothermal water; an adsorption pH value was controlled as 12; an adsorption column had a radius of 5 cm and a column height of 50 cm; and a flow rate was 20 ml·min⁻¹. A real product picture and a polarizing microscope magnified drawing of the prepared material are shown in Figs. 4(a) and 4(b).

Compared with a polyacrylonitrile-Li₂TiO₃ electrostatic spinning nanofiber membrane, the adsorption rate of the polyacrylonitrile- Li₂TiO₃ spinning composite material prepared in the present embodiment is significantly increased. For example, a polyacrylonitrile-Li₂TiO₃ electrostatic spinning nanofiber membrane reported in the literature "Journal of Industrial and Engineering Chemistry, 2019, 70, 124-135" achieves adsorption equilibrium within 12 hours at normal temperature in a lithium chloride solution having an initial lithium-ion concentration of 70 mg·L⁻¹; and adsorption equilibrium capacity is up to 28 mg·g⁻¹. However, for the polyacrylonitrile-Li₂TiO₃ spinning composite material in the present embodiment, column-bed dynamic adsorption capacity is up to 29.8 mg·g⁻¹ under the same adsorption condition; adsorption equilibrium time is only 1 hour, and efficiency is increased by 12 times. Meanwhile, compared with the nanofiber membrane, the spinning composite material is easy to process, high in strength and easy for engineering application.

The embodiments of the present invention are displayed and described above. The advantages of simplicity in operation and cheap and readily available raw materials in the present invention are reflected. It should be understood that detailed descriptions of the preferred embodiments for the technical solutions of the present invention are schematic rather than restrictive. Improvements or transformations may be made by those skilled in the art on the basis of reading the description of the present invention.

All the improvements and transformations fall within the protection scope of the attached c claim s in the present invention.

## Claims

1. A preparation method for porous spinning composite material for extracting lithium from liquid lithium ore, wherein, comprising the following steps:
(1) heating and stirring a high-molecular polymer to be dissolved into an organic solvent; and standing and defoaming the mixed solution at room temperature, wherein the organic solvent is one or a mixture of more than one of dimethyl formamide, dimethyl acetamide, dimethyl sulfoxide, N-methyl pyrrolidone, tetrahydrofuran, dichloromethane and tetrachloromethane;
wherein the high-molecular polymer is one or a mixture of more than one of polyethylene, polypropylene, polyvinyl chloride, polyvinylidene fluoride, polytetrafluoroethylene, polystyrene, polyacrylonitrile, polyamide, polysulfone, sulfonated polysulfone, polyarylsulfone and polyether sulfone;
(2) adding a certain amount of lithium-ion sieve powder and a water-soluble pore-forming agent into the mixed solution obtained in step (1); and fully stirring and uniformly mixing the lithium-ion sieve powder and the water-soluble pore-forming agent to obtain a composite spinning stock solution of the high-molecular polymer/lithium-ion sieve, wherein the water-soluble pore-forming agent is a mixture of more than one of LiCl, KCl, NaHCO₃, NH₄HCO₃, polyethylene glycol-200/400/600/800/1000 and polyvinyl pyrrolidone, and the additional amount of the pore-forming agent is 2-10% of the total mass of the mixed solution, under the condition the porosity of the composite fibers are greatly increased and leakage of the lithium-ion sieve powder material is avoided, and the mass ratio of the high-molecular polymer to the lithium-ion sieve is 1:4-4: 1;
wherein the lithium-ion sieve powder is LiTi₂O₄, Li₂TiO₃, Li₄Ti₅O₁₂, or one or a mixture of more than one of H products of LiTi₂O₄, Li₂TiO₃ and Li₄Ti₅O₁₂ after acid pickling;
(3) adding the composite spinning stock solution obtained in step (2) into a raw material tank of wet spinning equipment; spraying the spinning stock solution into a coagulating bath by a spinning jet for performing phase inversion molding to obtain a porous composite precursor, wherein the coagulating bath is a mixed aqueous solution containing organic solvents such as one or more than one of dimethyl formamide, dimethyl acetamide, dimethyl sulfoxide, N-methyl pyrrolidone, tetrahydrofuran and dichloromethane, and has a mass fraction of 5-25%;
wherein the coagulating bath is a mixed aqueous solution containing one or more than one of dimethyl formamide, dimethyl acetamide, dimethyl sulfoxide, N-methyl pyrrolidone, tetrahydrofuran, and dichloromethane, and has a mass fraction of 5-25%;
wherein the spinning jet of the wet spinning equipment has 20-60 holes; each spinneret hole has a diameter of 0.05-0.5 mm; a spinning speed is 2-20 m/min; and a winding machine has a speed of 2-30 m/min;
(4) conducting draft washing on the composite precursor subjected to coagulation molding in step (3) and curing the composite precursor to obtain the porous spinning composite material.

## Patentansprüche

1. Herstellungsverfahren eines porösen Spinnverbundmaterials zur Gewinnung von Lithium aus flüssigem Lithiumerz, wobei es die folgenden Schritte umfasst:
(1) Erhitzen und Rühren eines hochmolekularen Polymers, das in einem organischen Lösungsmittel gelöst werden soll; anschließendes Stehenlassen und Entschäumen der gemischten Lösung bei Raumtemperatur, wobei das organische Lösungsmittel eines oder eine Mischung aus mehreren der folgenden ist: Dimethylformamid, Dimethylacetamid, Dimethylsulfoxid, N-Methylpyrrolidon, Tetrahydrofuran, Dichlormethan und Tetrachlormethan;
wobei das hochmolekulare Polymer eines oder eine Mischung aus mehreren der folgenden ist: Polyethylen, Polypropylen, Polyvinylchlorid, Polyvinylidenfluorid, Polytetrafluorethylen, Polystyrol, Polyacrylnitril, Polyamid, Polysulfon, sulfoniertem Polysulfon, Polyarylsulfon und Polyethersulfon ist;
(2) Zugabe einer bestimmten Menge Lithiumionen-Siebpulver und eines wasserlöslichen Porenbildners zu der in Schritt (1) erhaltenen gemischten Lösung; und vollständiges Rühren und gleichmäßiges Mischen des Lithiumionen-Siebpulvers und des wasserlöslichen Porenbildners, um eine zusammengesetzte Spinnstofflösung aus dem hochmolekularen Polymer/Lithium-lonen-Sieb zu erhalten, wobei der wasserlösliche Porenbildner eine Mischung aus einem oder mehreren der folgenden ist: LiCl, KCl, NaHCO₃, NH₄HCO₃, Polyethylenglykol-200/400/600/800/1000 und Polyvinylpyrrolidon; und die zusätzliche Menge des Porenbildners 2-10 % der Gesamtmasse der gemischten Lösung beträgt, unter der Bedingung, dass die Porosität der Verbundfasern stark erhöht wird und ein Austreten des Lithiumionen-Siebpulvermaterials vermieden wird, und das Massenverhältnis des hochmolekularen Polymers zum Lithiumionen-Sieb 1:4-4:1 beträgt;
wobei das Lithiumionen-Siebpulver LiTi₂O₄, Li₂TiO₃, Li₄Ti₅O₁₂ oder eines oder eine Mischung aus einem oder mehreren der H-Produkte von LiTi₂O₄, Li₂TiO₃ und Li₄Ti₅O₁₂ nach Säurebeizen ist;
(3) Zugabe der in Schritt (2) erhaltenen zusammengesetzten Spinnstofflösung in einen Rohmaterialtank einer Nassspinnanlage; Sprühen der Spinnstofflösung in ein Koagulationsbad mittels einer Spinndüse zur Phaseninversionsformung, um einen porösen Verbundvorläufer zu erhalten, wobei das Koagulationsbad eine gemischte wässrige Lösung ist, die organische Lösungsmittel wie eines oder mehrere von Dimethylformamid, Dimethylacetamid, Dimethylsulfoxid, N-Methylpyrrolidon, Tetrahydrofuran und Dichlormethan enthält und einen Massenanteil von 5-25 % aufweist;
wobei das Koagulationsbad eine gemischte wässrige Lösung ist, die eines oder mehrere von Dimethylformamid, Dimethylacetamid, Dimethylsulfoxid, N-Methylpyrrolidon, Tetrahydrofuran und Dichlormethan enthält und einen Massenanteil von 5-25 % aufweist;
wobei die Spinndüse der Nassspinnanlage 20-60 Löcher mit einem Durchmesser von jeweils 0,05-0,5 mm aufweist; wobei die Spinngeschwindigkeit 2-20 m/min, und wobei eine Wickelmaschine eine Geschwindigkeit von 2-30 m/min hat ;
(4) Durchführen einer Zugwäsche an dem Verbundvorläufer, der in Schritt (3) einer Koagulationsformung unterzogen wurde, und Aushärten des Verbundvorläufers, um das poröse Spinnverbundmaterial zu erhalten.

## Revendications

1. Procédé de préparation d'un matériau composite poreux de filature pour une extraction de lithium à partir d'un minerai de lithium liquide, comprenant les étapes suivantes :
(1) chauffer et agiter un polymère de haut poids moléculaire pour le dissoudre dans un solvant organique ; et laisser la solution mixte obtenue à température ambiante pour éliminer des mousses, dans lequel le solvant organique est un ou un mélange de plusieurs parmi le diméthylformamide, le diméthylacétamide, le diméthylsulfoxyde, le N-méthylpyrrolidone, le tétrahydrofurane, le dichlorométhane et le tétrachlorométhane ;
dans lequel le polymère de haut poids moléculaire est un ou un mélange de plusieurs parmi le polyéthylène, polypropylène, le chlorure de polyvinyle, le fluorure de polyvinylidène, le polytétrafluoroéthylène, le polystyrène, le polyacrylonitrile, le polyamide, le polysulfone, le polysulfone sulfoné, le polyarylsulfone et le polyéther sulfone ;
(2) ajouter une quantité de poudre de tamis au lithium-ion et un agent pore-formant soluble dans l'eau à la solution mixte obtenue à l'étape (1) ; et bien agiter et mélanger de manière homogène la poudre de tamis au lithium-ion et l'agent pore-formant soluble dans l'eau pour obtenir une solution mère composite de filature du polymère de haut poids moléculaire/tamis au lithium-ion, dans lequel l'agent pore-formant soluble dans l'eau est un mélange de plusieurs parmi LiCl, KCl, NaHCO₃, NH₄HCO₃, le polyéthylène glycol-200/400/600/800/1000 et le polyvinylpyrrolidone, et la quantité d'ajout de l'agent pore-formant est de 2 à 10 % de la masse totale de la solution mixte dans la condition où la porosité des fibres composites est considérablement augmentée et la fuite du matériau de poudre de tamis au lithium-ion est évitée, et le rapport de masse du polymère de haut poids moléculaire au tamis au lithium-ion est de 1 : 4-4 : 1 ;
dans lequel la poudre de tamis au lithium-ion est LiTi₂O₄, Li₂TiO₃, Li₄Ti₅O₁₂, ou un ou un mélange de plusieurs parmi H produits de LiTi₂O₄, Li₂TiO₃ et Li₄Ti₅O₁₂ après décapage à l'acide ;
(3) ajouter la solution mère composite de filature obtenue à l'étape (2) dans un réservoir de matière première d'un équipement de filature humide ; et pulvériser la solution mère de filature dans un bain de coagulation par un jet de filature pour exécuter un moulage par inversion de phase afin d'obtenir un précurseur composite poreux, dans lequel le bain de coagulation est une solution aqueuse mixte contenant des solvants organiques tels qu'un ou plusieurs parmi le formamide de diméthyle, l'acétamide de diméthyle, le sulfoxyde de diméthyle, le N-méthylpyrrolidone, le tétrahydrofurane et le dichlorométhane dont une fraction massique est de 5 à 25 % ;
dans lequel le bain de coagulation est une solution aqueuse mixte contenant un ou plusieurs parmi le diméthylformamide, le diméthylacétamide, le diméthylsulfoxyde, le N-méthylpyrrolidone, le tétrahydrofurane et le dichlorométhane dont une fraction massique est de 5 à 25 % ;
dans lequel le jet de filature de l'équipement de filature humide a 20 à 60 trous ; chaque trou filière présente un diamètre de 0,05 à 0,5 mm ; une vitesse de filature est de 2 à 20 m/min ; et une bobineuse présente une vitesse de 2 à 30 m / min ;
(4) exécuter un lavage à ébauche sur le précurseur composite soumis à un moulage par coagulation à l'étape (3) et durcir le précurseur composite pour obtenir le matériau composite poreux de filature.
